# EUROPÄISCHE PATENTSCHRIFT

(11) **EP 3 969 325 B1**
(45) Veröffentlichungstag und Bekanntmachung des Hinweises auf die Patenterteilung: **19.08.2026**
(21) Anmeldenummer: 20713849.6
(22) Anmeldetag: 12.03.2020
(51) Int. Cl.: B60N 2/26, B60N 2/28, B62B 9/10, F16B 17/00

(54) **KINDERAUFNAHMEEINRICHTUNG**
BABY-HOLDING DEVICE
SYSTÈME CONÇU POUR RECEVOIR UN ENFANT

(30) Priorität: 16.05.2019 DE 202019102781 U
(43) Veröffentlichungstag der Anmeldung: 23.03.2022
(73) Patentinhaber: CYBEX GmbH, 95448 Bayreuth (DE)
(72) Erfinder: KOHLMANN, Harald, 1220 Wien (AT)
(74) Vertreter: Meissner Bolte Partnerschaft mbB
(86) Internationale Anmeldenummer: PCT/EP2020/056657
(87) Internationale Veröffentlichungsnummer: WO 2020/229021

(56) Entgegenhaltungen:
- DE-A1- 10 218 444
- DE-U1- 202009 013 177
- FR-A1- 2 671 587

## Beschreibung

Die Erfindung betrifft eine Kinderaufnahmeeinrichtung, insbesondere Kindersitz, Kinderwagen, Kinderstuhl, vorzugsweise Hochstuhl oder Schaukelstuhl, Kinderwiege, Kinderbett oder Kindertrage sowie ein entsprechendes Herstellungs- bzw. Montageverfahren.

Kinderaufnahmeeinrichtungen, wie insbesondere Kindersitze, Kinderwägen, Kinderstühle, vorzugsweise Hochstühle oder Schaukelstühle, Kinderwiegen, Kinderbetten oder Kindertragen, sind grundsätzlich bekannt. Derartige Kinderaufnahmeeinrichtungen umfassen üblicherweise mehrere (Haupt-) Bestandteile, wie insbesondere Hartkunststoffelemente, Teile aus (Hart-) Schaum, Textilien, ggf. Metallrohre oder andere Elemente aus Metall, ggf. Gurte und/oder ggf. Weichschäume (etc.).

Kinderaufnahmeeinrichtungen sind im Stand der Technik bekannt aus der DE 20 2009 013 177 U1, aus der DE 102 18 444 A1 und aus der FR 2 671 587 A1.

Verschiedene formstabile Teile werden untereinander üblicherweise durch Schrauben, Nieten oder Kleben verbunden, insbesondere wenn es sich um lasttragende Teile handelt. Diese bekannten Verbindungsmethoden werden jedoch noch, insbesondere hinsichtlich des Herstellungsaufwandes sowie in der Anwendung des Kindersitzes, als verbesserungswürdig angesehen.

Es ist daher Aufgabe der Erfindung, eine Kinderaufnahmeeinrichtung vorzuschlagen, bei der eine zuverlässige Verbindung zwischen zwei (insbesondere lasttragenden) Einzel-Teilen mit vergleichsweise geringem Aufwand ermöglicht ist.

Diese Aufgabe wird durch eine Kinderaufnahmeeinrichtung nach Anspruch 1 und durch ein Verfahren nach Anspruch 14 gelöst.

Ein Kerngedanke der Erfindung liegt darin, eine Kinderaufnahmeeinrichtung vorzuschlagen, bei der ein (insbesondere lösbares) Verbinden zweier (insbesondere lasttragender) Teile über mindestens ein Vorsprung-Ausnehmung-Paar realisiert wird, wobei der Vorsprung so ausgestaltet ist, dass er zumindest an einer Stelle (bzw. in einem Querschnitt) größer dimensioniert ist als mindestens eine Stelle (mindestens ein Querschnitt) der Ausnehmung. Dadurch kann auf einfache Weise eine Arretierung in Form eines Reib- und/oder Formschlusses ermöglicht werden. Weiterhin kann auf einfache Art und Weise eine Lösbarkeit der Verbindung realisiert werden. Im Vergleich zu Schraubverbindungen wird eine vergleichsweise einfache Verbindung, sowohl bezüglich der Materialkosten als auch bezüglich der Montage, erzielt. Gegenüber einem Vernieten ist der Aufwand ebenfalls vergleichsweise gering, außerdem kann insbesondere eine (oftmals vorteilhafte) Lösbarkeit erzielt werden. Auf Zusatzteile (z. B. in Form von Schrauben oder Nieten) kann verzichtet werden. Gegenüber einem Verkleben liegen Vorteile in prozesstechnischer Sicht sowie weniger Einschränkungen vor. Weiterhin muss keine Mindestgröße für Kontaktflächen (wie bei einer Verklebung) vorausgesetzt werden. Insofern ist die vorgeschlagene Lösung vergleichsweise variabel einsetzbar. Dennoch kann die Verbindung ausreichend belastbar ausgestaltet werden und insbesondere auch in Fahrzeug-Kindersitzen zum Einsatz kommen (auch bzw. gerade unter Berücksichtigung der während eines Unfalls wirkenden Kräfte). Die Verbindung ist insgesamt vergleichsweise kostengünstig in Bezug auf Material und Montage und kommt insbesondere mit möglichst wenigen oder ohne Zusatzteile aus.

Erfindungsgemäß wurde dabei auch erkannt, dass bei Kinderaufnahmeeinrichtungen, wie insbesondere Kindersitzen, zwar einerseits nicht unerhebliche Kräfte wirken können, andererseits dennoch die hier vorgeschlagene vergleichsweise einfache und kostengünstige Lösung ausreichen kann. Im Ergebnis handelt es sich um eine Verbindungslösung, die besonders vorteilhaft auf Kinderaufnahmeeinrichtungen zugeschnitten ist.

Erstes und zweites Teil sind vorzugsweise strukturell voneinander getrennt (bzw. voneinander abgegrenzt), insbesondere nicht-monolithisch ausgebildet, jedoch über mindestens ein Ausnehmung-Vorsprung-Paar verbindbar oder miteinander verbunden. Alternativ können erstes und zweites Teil auch per se (beispielsweise über ein (Film-)Scharnier) miteinander verbunden sein und zusätzlich noch über mindestens ein Ausnehmung-Vorsprung-Paar miteinander verbunden oder verbindbar sein (beispielsweise in einem aneinander geführten oder zusammengeklappten Zustand).

Unter einer Zylinderform ist insbesondere eine Form zu verstehen, bei der eine ebene (geschlossene) Kurve in einer Ebene (erste Stirnfläche) entlang einer Gerade um eine vorgegebene Strecke verschoben wird und nach der Verschiebung eine zweite ebene Kurve (zweite Stirnfläche) definiert. Unter einem Zylinder ist insbesondere ein "allgemeiner Zylinder" im mathematischen Sinne zu verstehen. Es kann sich um einen geraden oder schiefen Zylinder, insbesondere jedoch um einen geraden Zylinder, handeln. Nur wenn dies konkret angegeben ist, soll es sich bei der Zylinderform um eine Kreiszylinderform handeln. Alternative Formen (also insbesondere alternativ ausgebildete Stirnflächen) können Ecken aufweisen, beispielsweise als Drei-, Vier-, Fünf- oder Mehreck ausgebildet sein oder auch beispielsweise sternförmig (mit 3, 4, 5 oder mehr Zacken) ausgebildet sein.

Bei dem jeweiligen (ersten bzw. zweiten) Querschnitt handelt es sich insbesondere um einen Radialschnitt und/oder einen Querschnitt senkrecht auf eine Bewegungsrichtung beim Einführen des Vorsprungs in die Ausnehmung zur Verbindung des ersten und zweiten Teiles und/oder parallel zu den Stirnflächen. Im Falle eines (geraden) Kreiszylinders wäre der jeweilige Querschnitt insbesondere (kreis-) rund. Bei dem jeweiligen Querschnitt soll es sich insbesondere um eine (jeweilige) Querschnittsfläche (z. B. Kreis mit Durchmesser XY) handeln.

Die erfindungsgemäß zu vergleichenden Querschnitte können im verbundenen Zustand in einer Ebene liegen (was jedoch nicht zwingend ist und auch in manchen Ausführungsformen nicht der Fall ist). Beispielsweise kann mindestens ein zweiter Querschnitt des Vorsprungs im verbundenen Zustand außerhalb der Ausnehmung und/oder hinter mindestens einem ersten Querschnitt (also im verbundenen Zustand tiefer in der Ausnehmung und/oder weiter in Richtung distales Ende des Vorsprungs als der erste Querschnitt) liegen (beispielsweise bei Ausführungsformen mit Hintergreifung und/oder Hinterschnitt). Ein Querschnittsrand kann kontinuierlich sein oder ggf. unterbrochen (beispielsweise, wenn der Vorsprung Schlitze oder sonstige, insbesondere axial verlaufende, Ausnehmungen aufweist). Insgesamt sollen mindestens ein erster Querschnitt und mindestens ein zweiter Querschnitt vorliegen, der die obige Bedingung erfüllt. Es können jedoch auch mehr als ein erster Querschnitt und/oder mehr als ein zweiter Querschnitt in diesem Sinne vorliegen, beispielsweise zwei Querschnitte des zweiten Teils, die beide einen ersten Querschnitt des ersten Teils in diesem Sinne überragen (zumindest abschnittsweise).

Unter einem Überragen ist zu verstehen, dass der zweite Querschnitt (im verbundenen Zustand des ersten und zweiten Teiles) bei einer Projektion auf eine Ebene des ersten Querschnittes nicht vollständig auf oder innerhalb eines Randes des ersten Querschnittes liegt, sondern zumindest teilweise außerhalb dieses Randes. Von einem Querschnitt des ersten Querschnitts aus betrachtet, kann dieses Überragen über einen Winkelbereich von mindestens (ggf. aufsummiert, bei mehreren Abschnitten) 20°, vorzugsweise mindestens 90°, weiter vorzugsweise mindestens 180°, ggf. (zumindest nahezu) 360° erfolgen. Gerade bei geschlitzten Lösungen kann dieser Überragungsbereich auch weniger als 360° betragen.

Erstes und/oder zweites Teil können durch den Verbindungsvorgang verformt werden. Dadurch kann es sein, dass im verbundenen Zustand kein Querschnitt des zweiten Teils (mehr) existiert, der einen entsprechenden Querschnitt des ersten Teils überragt, beispielsweise bei rein reibschlüssigen bzw. kraftschlüssigen Verbindungen. In Alternativen (insbesondere mit federnden Strukturen, beispielsweise Blattfedern) kann die Form der Ausnehmung und des Vorsprungs auch nach dem Verbinden unverändert (gegenüber einem Zustand vor dem Verbinden) bleiben. Dann kann aber zumindest während des Verbindens (insbesondere bei Rast- und/oder Schnappmechanismen) eine kurzfristige Verformung erfolgen. Insbesondere sind folgende Alternativen vorstellbar: i) vorübergehende Verformung während des Einführens, keine (wesentliche) dauerhafte Verformung; ii) keine (wesentliche) Verformung während des Verbindens, keine (wesentliche) dauerhafte Verformung; iii) Verformung während des Verbindens, dauerhafte Verformung.

Vorsprung und/oder Ausnehmung weisen vorzugsweise kein Gewinde auf bzw. sind nicht als Schraube (bzw. Innenschraube) ausgebildet. Der Vorsprung ist insbesondere kein Niet oder Bestandteil eines solchen. Die gemäß obiger Definition überragenden Abschnitte des zweiten Querschnittes bilden vorzugsweise mindestens 2 Flächenprozent, weiter vorzugsweise mindestens 5 Flächenprozent, ggf. mindestens 10 Flächenprozent des zweiten Querschnittes aus und/oder höchstens 50 Flächenprozent, ggf. höchstens 20 Flächenprozent.

Die Ausnehmung kann sich an mindestens einem Ende, insbesondere einem einer Vorsprungs-Einführseite abgewandten Ende (ggf. zumindest abschnittsweise kontinuierlich) nach außen erweitern bzw. es kann sich eine entsprechende (ggf. zumindest abschnittsweise kontinuierliche) Erweiterung an die Ausnehmung anschließen.

Der Vorsprung kann in einem Axialschnitt und/oder im Dreidimensionalen pilzförmig ausgebildet sein, also einen (nach außen gewölbten) Hutabschnitt aufweisen, der einen entsprechenden Stielabschnitt überkragt (zumindest im Montagezustand).

Die Bezeichnung verschiedener Querschnitte als erster, zweiter (oder nachfolgend auch dritter oder vierter) Querschnitt soll insbesondere eine (begriffliche) Unterscheidung der einzelnen Querschnitte ermöglichen. Dabei bedeutet beispielsweise ein vierter Querschnitt nicht unbedingt, dass ein entsprechender dritter Querschnitt vorgesehen sein muss (es sei denn, ein dritter Querschnitt ist in der entsprechenden Definition enthalten).

In Ausführungsformen weist der Vorsprung mindestens einen vierten Querschnitt auf, der einem dritten Querschnitt der Ausnehmung, zumindest in einem Ausgangszustand des zweiten Vorsprungs, vor einem Verbinden mit der Ausnehmung, entspricht und/oder den dritten Querschnitt nicht (insbesondere auch nicht abschnittsweise) überragt. Der dritte Querschnitt entspricht vorzugsweise mindestens einem (dem mindestens einen) ersten Querschnitt. Bei dem dritten Querschnitt kann es sich jedoch auch um einen anderen Querschnitt als den ersten Querschnitt handeln. In Ausführungsformen liegt also im Bereich der Ausnehmung kein Querschnitt vor, der den ersten Querschnitt überragt (im verbundenen Zustand und/oder im Ausgangszustand). Dadurch kann insbesondere auf besonders einfache Art und Weise ein effektiver Formschluss erzielt werden.

In alternativen Ausführungsformen weist der Vorsprung keinen Querschnitt (Radialschnitt) auf, der mindestens einen ersten Querschnitt (Radialschnitt) nicht überragt. Sämtliche Querschnitte des Vorsprungs (sämtliche Radialschnitte) überragen also zumindest einen Querschnitt (Radialschnitt) der Ausnehmung, ggf. mehrere Querschnitte oder ein Kontinuum von Querschnitten oder sämtliche Querschnitte (zumindest im Ausgangszustand). In einer derartigen Konfiguration kann ein effektiver Kraft- bzw. Reibschluss erzielt werden, so dass eine einfache Arretierung erzielt wird.

Die Ausnehmung kann als Sackloch oder als Durchbruch ausgebildet sein.

Der Vorsprung kann (im verbundenen Zustand) die Ausnehmung durchdringen oder (in alternativen Ausführungsformen) nicht durchdringen. Im Falle eines Durchdringens hintergreift der Vorsprung an seinem distalen Ende vorzugsweise (im verbundenen Zustand) den Durchbruch. Dadurch kann eine besonders einfache Verbindung ermöglicht werden.

Im Allgemeinen kann zwischen Ausnehmung und Vorsprung (im verbundenen Zustand) eine reibschlüssige Verbindung vorliegen. Gegebenenfalls kann (zusätzlich) eine stoffschlüssige Verbindung, insbesondere durch Kleben und/oder Schweißen, vorliegen.

In bevorzugten Ausführungsformen liegt jedoch keine stoffschlüssige Verbindung vor bzw. die Verbindung ist durch Überwindung eines Kraftschlusses und/oder Formschlusses lösbar.

Im Allgemeinen soll die Verbindung durch mindestens eine Ausnehmung und mindestens einen Vorsprung (in Form eines Ausnehmung-Vorsprung-Paares) einer Kraft von mindestens 5 Newton, vorzugsweise mindestens 10 Newton und/oder höchstens 100 Newton, ggf. höchstens 50 Newton in alle Richtungen und/oder (zumindest) in eine axiale Richtung standhalten.

Der Vorsprung und/oder die Ausnehmung soll eine (axiale) Länge von mindestens 2 mm, vorzugsweise mindestens 5 mm und/oder höchstens 50 mm, vorzugsweise höchstens 30 mm aufweisen. Falls der Vorsprung (in axialer Richtung) länger ist als die Ausnehmung, soll der Vorsprung die Ausnehmung (im verbundenen Zustand) um mindestens 2 %, vorzugsweise mindestens 5 %, weiter vorzugsweise mindestens 10 % und/oder höchstens 50 %, vorzugsweise ggf. höchstens 30 % seiner axialen Länge überragen. Alternativ kann der Vorsprung (im verbundenen Zustand) sich über weniger als die gesamte Länge (Tiefe) der Ausnehmung (in axialer Richtung) erstrecken, beispielsweise über mindestens 50 %, vorzugsweise mindestens 80 % und/oder höchstens 95 %, ggf. jedoch auch (exakt) 100 %. Erster und/oder zweiter Querschnitt haben vorzugsweise einen Durchmesser von mindestens 2 mm, vorzugsweise mindestens 4 mm und/oder höchstens 20 mm, vorzugsweise höchstens 10 mm (wobei der Durchmesser als maximal möglicher Abstand zweier beliebiger Punkte innerhalb des Querschnittes gelten soll, wenn man sämtliche mögliche Punktepaare betrachtet).

Das erste Teil ist zumindest abschnittsweise (insbesondere angrenzend an die Ausnehmung) aus einem ersten Material gebildet. Das zweite Teil ist zumindest abschnittsweise (insbesondere im Bereich des Vorsprungs, ggf. den gesamten Vorsprung umfassend) aus einem zweiten Material gebildet. In Ausführungsformen ist das erste Material weicher (also weniger hart) als das zweite Material. Alternativ oder zusätzlich weist das erste Material einen geringeren E-Modul auf als das zweite Material. Konkret kann das erste Material aus einem porösen und/oder expandierten Kunststoff (beispielsweise Polystyrol und/oder Polyolefin, insbesondere Polyethylen und/oder Polypropylen) gebildet werden. Alternativ oder zusätzlich kann das zweite Material aus einem Metall und/oder unporösen und/oder nicht-expandierten Kunststoff (beispielsweise Polystyrol und/oder Polyolefin, insbesondere Polyethylen und/oder Polypropylen) gebildet werden. Insoweit erstes Material und zweites Material sich hinsichtlich ihrer Härte unterscheiden, diese also zu bestimmen bzw. festzulegen ist, sollen vorzugsweise die Härte nach Martens (insbesondere DIN EN ISO 14577, in ihrer Gültigkeit zum Anmelde- bzw. Prioritätszeitpunkt), Rockwell (insbesondere DIN EN ISO 6508-1, in ihrer Gültigkeit zum Anmelde- bzw. Prioritätszeitpunkt), Brinell, Vickers (insbesondere gemäß DIN EN ISO 6507-1, in ihrer Gültigkeit zum Anmelde- bzw. Prioritätszeitpunkt), Shore (insbesondere gemäß DIN EN ISO 868, DIN ISO 7619-1 und/oder ASTM D2240-00) und/oder Mohs herangezogen werden. Zur Bestimmung der Härte können ggf. absolute Werte bestimmt werden. Eine relative Bestimmung kann jedoch ausreichen, beispielsweise durch einen Ritzversuch gemäß Mohs. Ritzt ein Material A ein Material B und nicht umgekehrt kann das Material A als härter gelten. Das jeweilige Material kann homogen oder inhomogen und/oder isotrop oder anisotrop aufgebaut sein. Bei inhomogenen und/oder anisotropen Materialien soll insbesondere die Härte bzw. der E-Modul unter der Annahme eines homogenen und isotropen Materials bestimmt werden. Bei Anisotropie soll insbesondere die axiale Richtung als zu vermessende Richtung herangezogen werden. Bei entsprechend ausgebildeten Härten bzw. E-Modulen kann eine effektive Verbindung auf einfache Art und Weise erfolgen.

Der zweite Querschnitt ist als Dreieck oder Vier- oder Sechseck ausgebildet. Dadurch kann ein effektiver Kraftschluss und ggf. Formschluss erfolgen.

Der Vorsprung und/oder eine Wandung der Ausnehmung kann mindestens einen Federabschnitt, insbesondere Blattfederabschnitt, vorzugsweise an bzw. innerhalb eines distalen Abschnittes des Vorsprunges, aufweisen. Der Federabschnitt (Blattfederabschnitt) ist vorzugsweise integraler Bestandteil des Vorsprungs bzw. der Wandung der Ausnehmung und wird beispielsweise durch mindestens ein(en) (vorzugsweise zwei) Schlitz(e) definiert. Konkret kann sich der Federabschnitt (Blattfederabschnitt) bzw. die optionalen zugehörigen Schlitze über mindestens 50 % der axialen Länge des Vorsprungs bzw. der Ausnhemung erstrecken und/oder über maximal 95 %. Dadurch kann eine einfache und schnelle Verbindung ermöglicht werden.

Der Vorsprung kann die Ausnehmung (wenn sie als Durchbruch ausgebildet ist) zumindest über einen Abschnitt eines Randes der Ausnehmung (ggf. über den gesamten Rand der Ausnehmung oder zumindest über einen Winkelbereich von mindestens 90°, vorzugsweise mindestens 180°) hintergreifen. Alternativ oder zusätzlich kann der Vorsprung und/oder eine Wandung der Ausnehmung mindestens eine Schnapp- und/oder Rasteinrichtung, insbesondere einen Schnapp- und/oder Rasthaken, aufweisen. Dadurch kann auf einfache Weise eine Verbindung, insbesondere mittels Formschluss, erzielt werden.

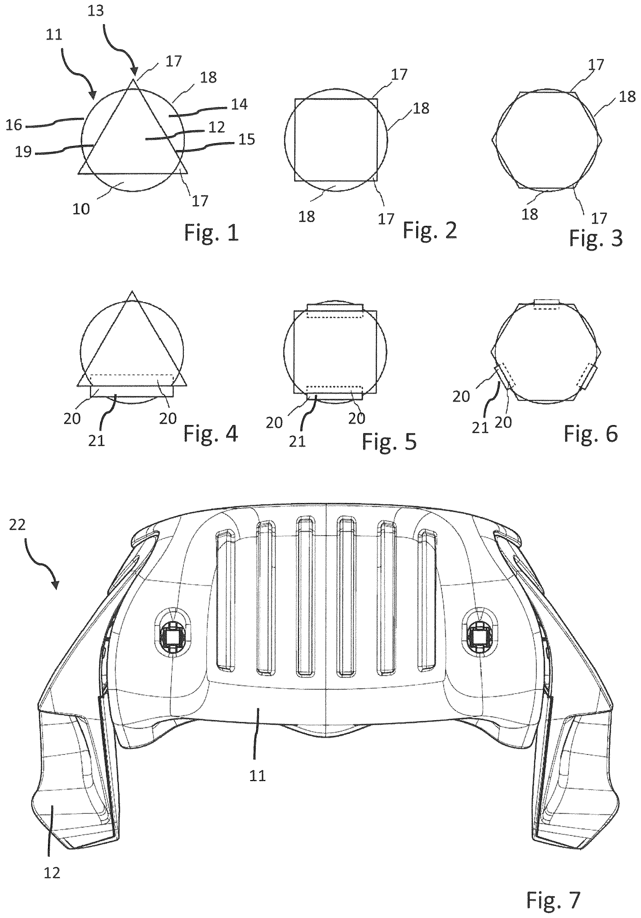

Auch der erste Querschnitt kann ggf. den zweiten Querschnitt abschnittsweise (nicht-vollständig) überragen. Wenn beispielsweise der erste Querschnitt ein Kreis ist und der zweite Querschnitt ein Viereck, kann das Viereck in den Eckbereichen den Kreis überragen und umgekehrt der Kreis das Viereck in zwischen den Ecken liegenden Abschnitten (wie auch anhand der Fig. 2 illustriert). Gegebenenfalls kann der erste Querschnitt den zweiten Querschnitt auch nicht (einmal) abschnittsweise überragen, beispielsweise wenn beide Querschnitte kreisförmig ausgebildet sind und der erste Querschnitt vollständig innerhalb des zweiten Querschnittes (bei einer Projektion, wie oben erläutert) liegt.

In den Ausführungsformen kann der Vorsprung mindestens eine (vorzugsweise axial verlaufende) Ausnehmung, insbesondere einen Schlitz, vorzugsweise axialen Schlitz, insbesondere mindestens zwei oder mindestens vier Schlitze, aufweisen.

Dadurch können Abschnitte des Vorsprungs auf besonders einfache Art und Weise federnd ausgebildet werden.

Der Vorsprung kann insgesamt (ggf. vorgesehene Schlitze, insbesondere axiale Schlitze, nicht berücksichtigend) als Hohlzylinder ausgebildet sein und/oder eine Wandstärke aufweisen, die weniger als 2 mm und/oder mehr als 0,5 mm beträgt. Die Kinderaufnahmeeinrichtung kann mindestens zwei, weiter vorzugsweise mindestens vier Vorsprung/Ausnehmungs-Paare aufweisen, wobei jeder Vorsprung wahlweise dem ersten Teil oder zweiten Teil und die zugehörige Ausnehmung dem jeweils anderen Teil zugeordnet ist.

Das erste Teil kann mindestens einen Vorsprung, vorzugsweise mindestens zwei Vorsprünge, weiter vorzugsweise mindestens vier Vorsprünge aufweisen, die jeweils ausgebildet sind mit korrespondierenden Ausnehmungen des zweiten Teils verbunden zu werden. Alternativ oder zusätzlich kann das erste Teil mindestens zwei Ausnehmungen, weiter vorzugsweise mindestens vier Ausnehmungen aufweisen, die jeweils ausgebildet sind, mit korrespondierenden Vorsprüngen des zweiten Teils verbunden zu werden. In konkreten Ausführungsformen können also sowohl das erste als auch das zweite Teil jeweils mindestens einen Vorsprung und jeweils mindestens eine Ausnehmung (beispielsweise mindestens zwei Vorsprünge oder zwei Ausnehmungen) aufweisen. In alternativen Ausführungsformen kann auch vorgesehen sein, dass das erste Teil nur Ausnehmungen aufweist und das zweite Teil nur Vorsprünge (im obigen Sinne, also als Bestandteil eines korrespondierenden Ausnehmung-Vorsprung-Paares zur Verbindung der beiden Teile).

Das erste oder zweite Teil kann Folgendes ausbilden (zumindest teilweise, ggf. vollständig) oder umfassen: eine Sitzschale, insbesondere Kindersitzschale für ein Fahrzeug, eine Sitzbasis, insbesondere Kindersitzbasis für ein Fahrzeug, und/oder einen Fangkörper für einen Kindersitz.

In Ausführungsformen ist das erste und/oder zweite Teil ein Teil eines Fangkörpers für ein Kind zur Verwendung in einem Kraftfahrzeug, insbesondere als Bestandteil eines Kindersitzes für ein Kraftfahrzeug. Gerade bei einem derartigen Fangkörper ist es üblicherweise sinnvoll bzw. notwendig, eine härtere und eine weichere bzw. eine elastischere und eine weniger elastische Komponente bereitzustellen. Diese Komponenten müssen dann miteinander verbunden werden, was erfindungsgemäß besonders einfach erfolgen kann.

Insofern können auch beispielsweise verschiedene erste Teile mit demselben zweiten Teil (oder umgekehrt) verbunden werden bzw. verbindbar sein, beispielsweise um den Fangkörper (oder eine andere Kinderaufnahmeeinrichtung und/oder ein anderes Bauteil einer Kinderaufnahmeeinrichtung) entsprechend für den Anwendungszweck (größeres oder kleineres Kind oder im Hinblick auf andere Anwendungsfälle) zu konfigurieren.

In einer weiteren bevorzugten Ausführungsform handelt es sich bei erstem und/oder zweitem Teil um Bestandteile einer Sitzschale eines Kindersitzes und/oder um Bestandteile einer Sitzbasis eines Kindersitzes (für ein Kraftfahrzeug).

Das erste und/oder zweite Teil wiegt vorzugsweise mindestens 5 g, vorzugsweise mindestens 50 g und/oder höchstens 20 kg, ggf. höchstens 5 kg oder höchstens 1 kg.

Der jeweilige Vorsprung bildet vorzugsweise höchstens 20 Gew.-%, weiter vorzugsweise höchstens 5 Gew.-% und/oder mindestens 0,001 Gew.-%, ggf. mindestens 0,1 Gew.-% des zugeordneten ersten bzw. zweiten Teils aus.

Das erste Teil ist vorzugsweise mindestens 0,01-mal, weiter vorzugsweise mindesten 0,1-mal, ggf. mindestens 0,5-mal und/oder höchstens 100-mal, vorzugsweise höchstens 10-mal, ggf. höchstens 2-mal so schwer, wie das erste Teil.

Mindestens ein Vorsprung kann einstückig, vorzugsweise integral, weiter vorzugsweise monolithisch an das erste bzw. zweite Teil angeformt sein.

Mindestens ein Vorsprung und/oder das erste Teil und/oder das zweite Teil können zumindest abschnittsweise, ggf. vollständig, aus einem Kunststoff (insbesondere einem Polyolefin und/oder Polystyrol und/oder Polyamid) und/oder einem Metall, gebildet sein.

Die oben genannte Aufgabe wird weiterhin durch ein Verfahren nach Anspruch 14 zum Herstellen einer Kinderaufnahmeeinrichtung, insbesondere eines Kindersitzes, Kinderwagens, Kinderstuhls, vorzugsweise Hochstuhls oder Schaukelstuhls, einer Kinderwiege, eines Kinderbettes oder einer Kindertrage, gelöst, wobei ein erstes, zumindest abschnittsweise formstabiles, Teil und ein zweites, zumindest abschnittsweise formstabiles, mit dem ersten Teil verbundenes oder verbindbares, zweites Teil, bereitgestellt wird, wobei das erste Teil eine, insbesondere zumindest abschnittweise zylinderförmige, vorzugsweise zumindest abschnittweise kreiszylinderförmige, Ausnehmung mit mindestens einem ersten Querschnitt aufweist und das zweite Teil einen, insbesondere zumindest abschnittweise zylinderförmigen, vorzugsweise zumindest abschnittweise nichtkreiszylinderförmigen, Vorsprung mit mindestens einem zweiten Querschnitt aufweist, wobei der zweite Querschnitt den ersten Querschnitt zumindest in einem Ausgangszustand der Teile, vor einem Verbinden derselben, abschnittweise überragt, wobei der mindestens eine Vorsprung zum, insbesondere arretierenden, vorzugsweise rastenden, ggf. lösbaren, Verbinden der beiden Teile in die mindestens eine Ausnehmung geführt wird.

Weitere Verfahrensmerkmale ergeben sich aus der obigen Erläuterung zur Kinderaufnahmeeinrichtung, insbesondere insoweit funktionale Merkmale oder Herstellungsmerkmale beschrieben werden. Diese können dann als entsprechende Verfahrensschritte, insbesondere Herstellungsschritte, Bestandteil des Verfahrens zum Herstellen der Kinderaufnahmeeinrichtung sein.

Weiters offenbart wird ein System, umfassend das erste Teil und das zweite Teil (wie oben und nachstehend erläutert), insbesondere als Teile einer Kinderaufnahmeeinrichtung. Insbesondere kann das System mindestens zwei (hinsichtlich ihrer Größe und/oder hinsichtlich ihres Gewichts und/oder hinsichtlich ihrer Materialzusammensetzung und/oder hinsichtlich ihrer Form) verschiedene erste Teile aufweisen, die jeweils mit demselben zweiten Teil verbindbar sind bzw. verbunden werden und/oder mindestens zwei (hinsichtlich ihrer Größe und/oder hinsichtlich ihres Gewichts und/oder hinsichtlich ihrer Materialzusammensetzung und/oder hinsichtlich ihrer Form) verschiedene zweite Teile aufweisen, die jeweils mit demselben ersten Teil verbindbar sind bzw. verbunden werden.

Weiters offenbart wird die Verwendung eines ersten Teils und eines zweiten Teils, wie oben und nachfolgend beschrieben, für eine Kinderaufnahmeeinrichtung bzw. als Bestandteile einer solchen.

Weiters offenbart wird ein erstes (formstabiles) Teil und ein zweites (formstabiles) Teil, wobei das erste Teil eine Ausnehmung (Kavität, ggf. Loch) aufweist und das zweite Teil ein zylinderförmiges (bzw. zylinderartiges) Element aufweist, dessen Querschnitt den Querschnitt der Ausnehmung des zweiten Teils zumindest abschnittsweise überragt. Ausnehmung und zylinderartiges (zylinderförmiges) Element können sich an einander korrespondierenden Stellen des ersten und zweiten Teiles befinden, so dass das zylinderartige Element (unter entsprechender Krafteinwirkung) mit seinem distalen Ende in die Ausnehmung eingeführt werden kann, um erstes und zweites Teil miteinander zu verbinden. Vorzugsweise weist mindestens ein Querschnitt des zylinderartigen Elements Ecken auf, die mindestens einen Querschnitt der Ausnehmung überragen und insbesondere beim Einführen Material des ersten Teils verdrängen können. Vorzugsweise ist das zweite Teil härter als das erste Teil oder zumindest gleich hart.

In einer Weiterbildung dieses ersten Aspektes weist das zylinderförmige (zylinderartige) Element mindestens einen blattfederartigen Abschnitt am distalen Ende auf (vorzugsweise mindestens zwei und/oder höchstens vier, ggf. symmetrisch zueinander angeordnete, beispielsweise einander zumindest im Wesentlichen gegenüberliegende Abschnitte) auf, der/die einen Endabschnitt mit einem Rasthaken aufweist/aufweisen. In diesem Fall kann bei der Betrachtung des Querschnitts des zylinderartigen Elements der Rasthaken ggf. nicht berücksichtigt werden (also auch ohne Berücksichtigung des Rasthakens mindestens ein Querschnitt des zylinderartigen Elements vorliegen, das den Querschnitt der Ausnehmung überragt). Der (mindestens eine) Rasthaken kann, wenn das zylinderförmige Element vollständig (bzw. ausreichend weit) in die Ausnehmung hinein (bzw. durch das Loch hindurch) geschoben wurde mit einer entsprechenden Gegenstruktur der Ausnehmung (des Lochs) zusammenwirken und eine noch sicherere Verbindung ausbilden. Der (mindestens eine) optionale blattfederartige Abschnitt kann vorzugsweise zwischen einer gespannten, zugezogenen Stellung (in der der Rasthaken nicht über den Querschnitt des zylinderartigen Elements hinausragt) und einer zumindest teilweise entspannten, verriegelnden Stellung (in der der Rasthaken den Querschnitt des zylinderartigen Elements überragt) bewegt werden.

Die blattfederartigen Abschnitte (Elemente) können vorzugsweise durch geeignete Schlitze in Außenwänden des zylinderartigen Elements gebildet werden.

Optional ist eine Verklebung möglich, beispielsweise um eine Geräuschbildung zwischen EPS und PP-Spritzgussteilen zu vermeiden.

Bei Bedarf kann (beispielsweise zur Verteilung von durch Rasthaken auf den Rand der Ausnehmungen wirkenden Kräfte) eine Unterlegscheibe oder dergleichen verwendet werden.

Es wird ein erstes (formstabiles) Teil und ein zweites (formstabiles) Teil vorgeschlagen, wobei das erste Teil eine Ausnehmung (Kavität, ggf. ein Loch) aufweist und das zweite (formstabile) Teil ein zylinderartiges (bzw. zylinderförmiges) Element aufweist, die sich an einander korrespondierenden Stellen des ersten und zweiten Teils befinden und (zumindest abschnittsweise) formschlüssig zusammenwirken können, wenn das zylinderartige Element mit seinem distalen Ende in die Ausnehmung eingeführt wird.

Insbesondere kann es sich bei der Ausnehmung um eine Ausnehmung, insbesondere einen (Hohl-)Zylinder handeln, deren/dessen innerer Querschnitt (zumindest abschnittsweise) dem äußeren Querschnitt des zylinderartigen Elements entspricht (und zwar insbesondere auch in einem Ausgangzustand vor einem Einführen des zylinderartigen Elementes bzw. Vorsprungs in die Ausnehmung). Das zylinderartige Element kann mindestens zwei blattfederartige Abschnitte am distalen Ende aufweisen (vorzugsweise höchstens 6, weiter vorzugsweise höchstens vier blattfederartige Abschnitte) und/oder vorzugsweise zumindest im Wesentlichen symmetrisch zueinander angeordnete blattfederartige Abschnitte, beispielsweise einander im Wesentlichen gegenüberliegenden blattfederartige Abschnitte, die jeweils einen Endabschnitt mit einem Rasthaken aufweisen. Bei der Ermittlung des (jeweiligen) Querschnitts kann der Rasthaken optional unberücksichtigt bleiben. Der/die Rasthaken kann/können (wenn das zylinderförmige Element vollständig bzw. ausreichend weit in die Ausnehmung hinein, ggf. durch das Loch hindurch, geschoben wurde) mit einer entsprechenden Gegenstruktur der Ausnehmung (des Lochs) zusammenwirken und eine sicherere Verbindung ausbilden. Die blattfederartigen Abschnitte können zwischen einer gespannten, zurückgezogenen Stellung (in der die Rasthaken nicht über den Querschnitt des zylinderartigen Elementes hinausragen) in einer entspannten, verriegelnden Stellung (in der die Rasthaken den Querschnitt des zylinderartigen Elements überragen) bewegt werden. Die blattfederartigen Elemente können durch geeignete Schlitze in den Außenwänden des zylinderartigen Elementes gebildet sein.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine erste Ausführungsform einer erfindungsgemäßen Verbindungsstruktur in einer schematischen Ansicht;
- Fig. 2: eine zweite Ausführungsform einer erfindungsgemäßen Verbindungsstruktur in einer schematischen Ansicht;
- Fig. 3: eine dritte Ausführungsform einer erfindungsgemäßen Verbindungsstruktur in einer schematischen Ansicht;
- Fig. 4: eine vierte Ausführungsform einer erfindungsgemäßen Verbindungsstruktur in einer schematischen Ansicht;
- Fig. 5: eine fünfte Ausführungsform einer erfindungsgemäßen Verbindungsstruktur in einer schematischen Ansicht;
- Fig. 6: eine sechste Ausführungsform einer erfindungsgemäßen Verbindungsstruktur in einer schematischen Ansicht;
- Fig. 7: ein erfindungsgemäßer Fangkörper in einer Ansicht von hinten;
- Fig. 8: eine Darstellung des Fangkörpers analog Fig. 7, mit einem Teilanschnitt;
- Fig. 9: eine Vergrößerung des Ausschnitts des Bereichs A aus Fig. 8;
- Fig. 10: eine Vergrößerung des Ausschnitts des Bereichs B aus Fig. 8;
- Fig. 11: ein Querschnitt durch den Fangkörper gemäß Fig. 7;
- Fig. 12: eine Ausschnittvergrößerung des Bereichs C aus Fig. 11;
- Fig. 13: eine erfindungsgemäße untere Sitzschale eines Kindersitzes;
- Fig. 14: eine Vergrößerung des Ausschnitts A aus Fig. 13 zusammen mit einer oberen Sitzschale;
- Fig. 15: eine Schnittansicht der unteren Sitzschale gemäß Fig. 13 zusammen mit einer oberen Sitzschale;
- Fig. 16: eine perspektivische Ansicht des Schnitts aus Fig. 15;
- Fig. 17: eine Vergrößerung des Ausschnitts B aus Fig. 16.

In der nachfolgenden Beschreibung werden für gleiche und gleichwirkende Teile dieselben Bezugsziffern verwendet.

In Fig. 1 ist eine erste erfindungsgemäße Verbindungsstruktur für eine Kinderaufnahmeeinrichtung gezeigt. Die Verbindungsstruktur ist schematisch dargestellt. Die Blickrichtung ist axial. In der Ausführungsform gemäß Fig. 1 umfasst die Verbindungsstruktur eine Ausnehmung 10 eines ersten (zu verbindenden) Teiles 11 sowie einen Vorsprung 12 eines zweiten zu verbindenden Teils 13. Konkret ist in Fig. 1 ein erster Querschnitt 14 der Ausnehmung 10 sowie ein zweiter Querschnitt 15 des Vorsprungs 12 erkennbar. Diese können (müssen aber nicht) im montierten Zustand in einer Ebene liegen. In jedem Fall sind die Querschnitte so dargestellt, wie sie in einem Ausgangszustand (vor dem Verbinden) vorliegen.

Die Querschnitte ändern sich während des Verbindens. Beispielsweise kann sich der Vorsprung 12 in eine Innenwandung der Ausnehmung 10 abschnittsweise eindrücken, so dass diese Innenwandung (und dann auch der entsprechende Querschnitt) verformt wird. Wie in Fig. 1 erkennbar, überragt der zweite Querschnitt 15 eine Begrenzungslinie 16 des ersten Querschnitts in drei Abschnitten 17 (Überragungsabschnitte). In drei weiteren Abschnitten 18 dieser Begrenzungslinie 16 überragt der zweite Querschnitt 15 die Begrenzungslinie nicht, bzw. umgekehrt, die Begrenzungslinie 16 bzw. die korrespondierenden Abschnitte des ersten Querschnitts überragen eine Begrenzungslinie 19 des zweiten Querschnitts 15. Konkret ist in der Ausführungsform gemäß Fig. 1 der erste Querschnitt kreisrund ausgebildet und der zweite Querschnitt dreieckig. Vorzugsweise sind sowohl Ausnehmung 10 als auch Vorsprung 12 (zumindest im Ausgangszustand) zylinderförmig (im allgemeinen Sinne), dies muss jedoch nicht der Fall sein, insbesondere nicht über die gesamte (axiale) Länge des Vorsprungs 12 bzw. der Ausnehmung 10. Beispielsweise kann insbesondere der Vorsprung 12 auch eine Hintergreifung bzw. einen Hinterschnitt aufweisen.

Die Ausführungsformen gemäß den Fig. 2 und 3 entsprechen der Ausführungsform gemäß Fig. 1 mit dem Unterschied, dass der zweite Querschnitt 15 hier nicht dreieckig ist, sondern viereckig, insbesondere quadratisch (Fig. 2), bzw. sechseckig (Fig. 3) ausgebildet ist.

Die Ausführungsform gemäß Fig. 4 entspricht grundsätzlich der Ausführungsform gemäß Fig. 1, wobei hier jedoch zusätzlich (insbesondere an einem distalen Ende des Vorsprungs 12) ein Blattfeder-Abschnitt 20 (mit gestrichelt gezeichneter zurückgezogener Stellung) mit einem Rasthaken 21 befindlich ist. Der Rasthaken 21 hintergreift die Ausnehmung 10 (im montierten Zustand) vorzugsweise, so dass ein Formschluss realisiert wird. Fig. 5 entspricht grundsätzlich der Ausführungsform gemäß Fig. 2, wobei hier analog zu der Ausführungsform gemäß Fig. 4 zwei Blattfedern 20 mit entsprechenden Rasthaken 21 vorgesehen sind. Fig. 6 entspricht grundsätzlich der Ausführungsform gemäß Fig. 3, wobei hier zusätzlich analog Fig. 4 und 5 drei Blattfedern 20 mit entsprechenden Rasthaken 21 vorgesehen sind.

In den Ausführungsformen gemäß den Fig. 1-3 wird die Verbindung (bzw. entsprechende Haltekräfte) vorzugsweise überwiegend oder ausschließlich durch Reibung realisiert.

In den Ausführungsformen gemäß den Fig. 4-6 liegt zumindest auch ein Formschluss (und ggf. zusätzlich ein Reib-Kraftschluss) vor. Die Anzahl der Blattfederabschnitte gemäß Fig. 4-6 ist nicht zwingend. Beispielsweise können in Fig. 4 auch zwei oder drei Blattfederabschnitte 20 vorgesehen sein oder ausgehend von Fig. 5 eins, drei oder vier Blattfederabschnitte, oder ausgehend von Fig. 6 eins, zwei, vier, fünf oder sechs Blattfederabschnitte. Eine symmetrische Anordnung ist jedoch bevorzugt (punkt- und/oder achsensymmetrisch).

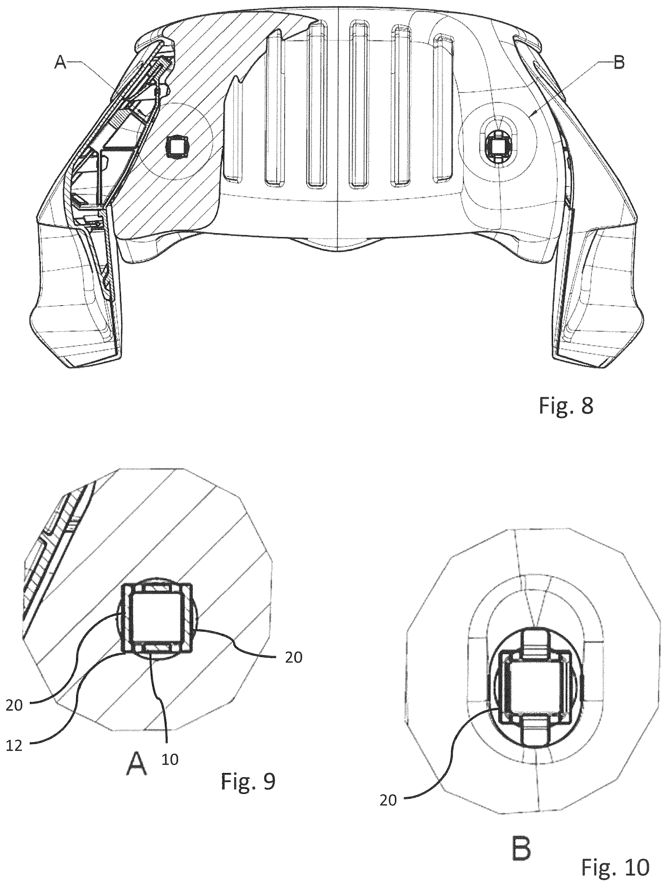

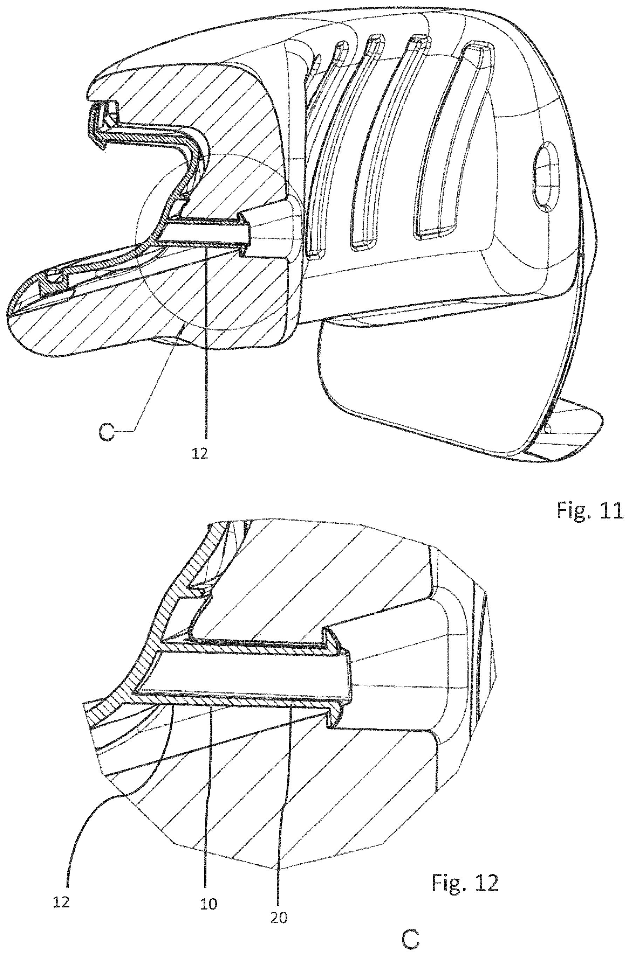

Fig. 7 zeigt einen Fangkörper 22 umfassend ein erstes Teil 11 sowie ein zweites Teil 12. Das erste Teil 11 weist Ausnehmungen 10 (siehe Figur 9 und 12) auf, die (im hier gezeigten, montierten Zustand) von Vorsprüngen 12 (zumindest bis hin zu einer Erweiterung nach der eigentlichen Ausnehmung, siehe Figuren 11 und 12) durchdrungen werden. Die Ausnehmungen 10 sind hier als Durchbrüche bzw. Löcher ausgebildet. Wie in Fig. 5 schematisch illustriert, weist die Ausführungsform gemäß Fig. 7-10 Blattfederabschnitte 20 auf, die die Ausnehmungen (an einem distalen Ende des Vorsprungs 12) hintergreifen (siehe Fig. 9 und 12).

In der Ausführungsform nach Fig. 7-10 besteht (umfasst) das erste Teil vorzugsweise (aus) expandierten/-m Kunststoff, z.B. (aus) EPS oder EPP, und das zweite Teil ist vorzugsweise ein (gespritztes) Kunststoffteil, insbesondere Hartkunststoffteil (nicht-expandiert bzw. nicht als Schaum vorliegend).

In den Ausführungsformen gemäß Fig. 1-10 (bzw. auch im Allgemeinen) kann die Ausnehmung einen ersten Querschnitt aufweisen, der nicht-kreisrund ist, beispielsweise (zumindest im Wesentlichen) rechteckig, insbesondere quadratisch oder auch einen Querschnitt, der dem zweiten Querschnitt (zumindest im Wesentlichen) entspricht, hinsichtlich der Form und/oder der Dimensionierung.

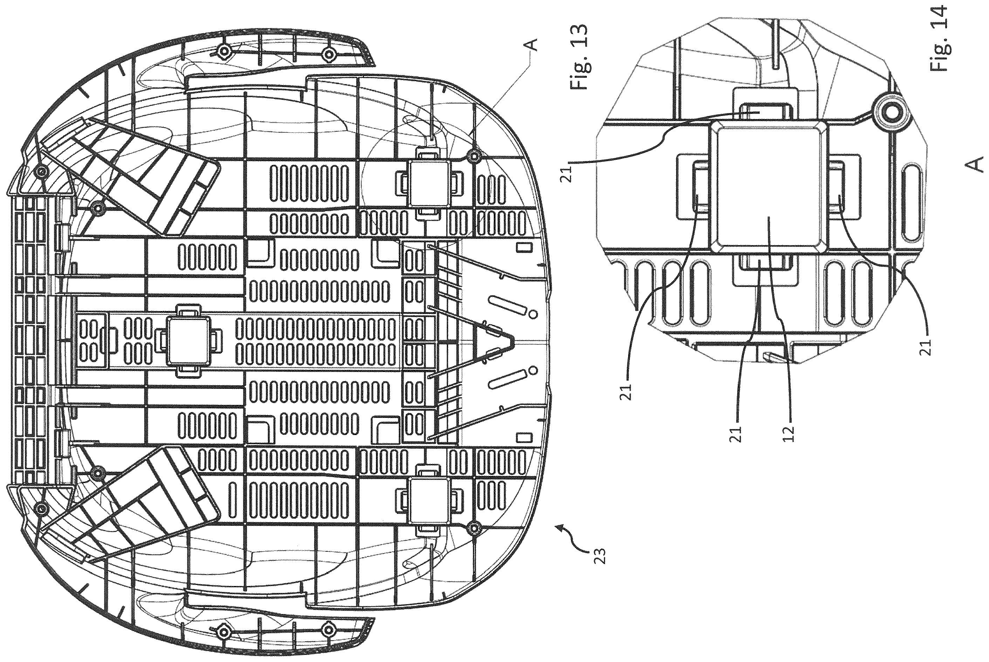

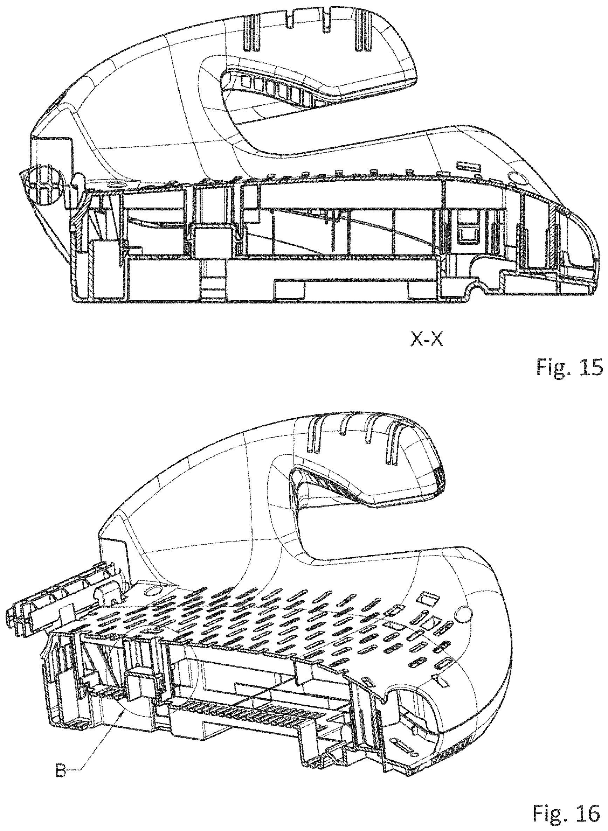

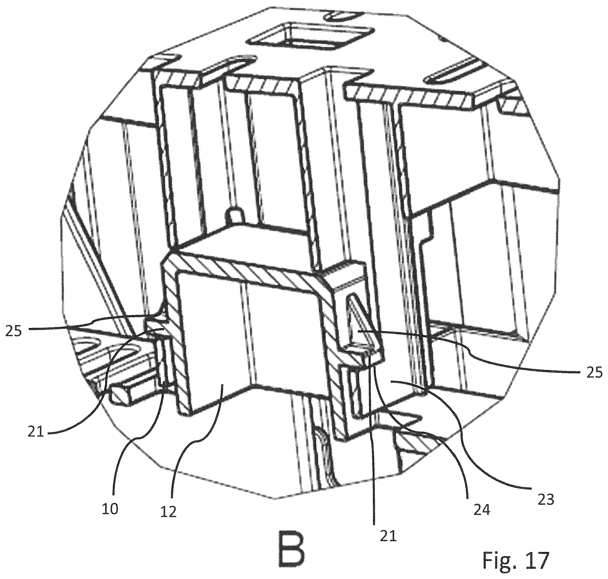

Die Fig. 13-16 zeigen einen erfindungsgemäßen Kindersitz bzw. eine erfindungsgemäße Sitzschale für einen solchen. In Fig. 13 ist ein (unteres) Sitzschalenteil (als zweites Teil 13) in einer Ansicht von oben gezeigt. In der Ausschnittvergrößerung gemäß Fig. 14 ist ein Vorsprung 12 des zweiten Teils mit (vier) Rasthaken 21 zu erkennen (siehe auch Fig. 17). Im montierten Zustand sind die Rasthaken 21 mit entsprechenden Gegenstrukturen 24 der Ausnehmung 10 eines ersten Teils 11 (ausführungsgemäß als oberes Sitzschalenteil ausgebildet; siehe Fig. 17) verrastet und bilden somit einen Formschluss zwischen dem ersten Teil 11 und dem zweiten Teil 13 aus. Bei einem Verbindungsvorgang (bzw. einem Einführen des Vorsprungs 12 in die Ausnehmung 10) kann eine Wandung 23 der Ausnehmung 10 zurückweichen und bei Einnehmen der Endposition des Vorsprungs 12 wieder in ihre Ausgangslange zurückkehren. Hier bildet also diese Wandung 23 eine Feder (blattfederartig) aus. Zur Erleichterung bzw. Ermöglichung dieses Vorgangs sind den Rasthaken 21 Anlaufschrägen 25 zugeordnet, die die Wandung 23 der Ausnehmung 10 beim Einführen zurückdrängen.
Insbesondere sei darauf hingewiesen, dass sämtliche Ausführungen zu der konkreten Verbindung der Teile gemäß Fig. 7-17 nicht zwingend (jedoch bevorzugt) nur im Zusammenhang mit einem Fangkörper bzw. Kindersitz realisiert sein müssen, sondern im Allgemeinen bei einer Kinderaufnahmeeinrichtung (bzw. zwei zu verbindenden Teilen derselben) zum Einsatz kommen können.

### Bezugszeichen

- 10: Ausnehmung
- 11: erstes Teil
- 12: Vorsprung
- 13: zweites Teil
- 14: erster Querschnitt
- 15: zweiter Querschnitt
- 16: Begrenzungslinie
- 17: Abschnitt
- 18: Abschnitt
- 19: Begrenzungslinie
- 20: Blattfederabschnitt
- 21: Rasthaken
- 22: Fangkörper
- 23: Wandung
- 24: Gegenstruktur
- 25: Anlaufschräge

## Patentansprüche

1. Kinderaufnahmeeinrichtung, insbesondere Kindersitz, Kinderwagen, Kinderstuhl, Kinderwiege, Kinderbett oder Kindertrage, umfassend ein erstes, zumindest abschnittsweise formstabiles, Teil (11) und ein zweites, zumindest abschnittsweise formstabiles, mit dem ersten Teil (11) verbundenes oder verbindbares, zweites Teil (13),
wobei das erste Teil (11) eine, insbesondere zumindest abschnittweise zylinderförmige, Ausnehmung (10) mit mindestens einem ersten Querschnitt (14) aufweist und das zweite Teil (13) einen, insbesondere zumindest abschnittweise zylinderförmigen Vorsprung (12) mit mindestens einem zweiten Querschnitt (15) aufweist, wobei der zweite Querschnitt (15) den ersten Querschnitt (14) zumindest in einem Ausgangszustand der Teile (11, 13), vor dem Verbinden derselben, zumindest abschnittsweise überragt, wobei der zweite Querschnitt (15) dreieckig, viereckig oder sechseckig ausgebildet ist, wobei der Vorsprung (12) in die Ausnehmung (10) einführbar ist, und wobei zwischen Ausnehmung (10) und Vorsprung (12) im verbundenen Zustand eine reibschlüssige Verbindung vorliegt.

2. Kinderaufnahmeeinrichtung nach Anspruch 1,
**dadurch gekennzeichnet, dass**
der Vorsprung (12) mindestens einen vierten Querschnitt aufweist, der einem dritten Querschnitt der Ausnehmung, zumindest in einem Ausgangszustand des zweiten Vorsprungs, vor einem Verbinden mit der Ausnehmung, entspricht und/oder den dritten Querschnitt nicht überragt, wobei
der dritte Querschnitt vorzugsweise mindestens einem ersten Querschnitt (14) entspricht.

3. Kinderaufnahmeeinrichtung nach einem der vorhergehenden Ansprüche, **dadurch gekennzeichnet, dass**
die Ausnehmung (10) als Sackloch oder als Durchbruch ausgebildet ist.

4. Kinderaufnahmeeinrichtung nach einem der vorhergehenden Ansprüche, **dadurch gekennzeichnet, dass**
zwischen Ausnehmung (10) und Vorsprung (12) im verbundenen Zustand eine formschlüssige Verbindung vorliegt.

5. Kinderaufnahmeeinrichtung nach einem der vorhergehenden Ansprüche, **dadurch gekennzeichnet, dass**
das erste Teil (11)zumindest abschnittsweise aus einem ersten Material gebildet ist und das zweite Teil (13) zumindest abschnittsweise aus einem zweiten Material gebildet ist, wobei das erste Material weicher als das zweite Material ist und/oder einen geringeren E-Modul aufweist als das zweite Material und/oder wobei das erste Material aus einem porösen und/oder expandierten Kunststoff gebildet ist und/oder wobei das zweite Material aus einem Metall und/oder unporösen und/oder nicht-expandierten Kunststoff gebildet ist.

6. Kinderaufnahmeeinrichtung nach einem der vorhergehenden Ansprüche, **dadurch gekennzeichnet, dass**
der Vorsprung (13) und/oder eine Wandung der Ausnehmung (10) mindestens einen Federabschnitt, insbesondere Blattfederabschnitt (20), vorzugsweise an bzw. innerhalb eines distalen Abschnittes des Vorsprunges, aufweist.

7. Kinderaufnahmeeinrichtung nach einem der vorhergehenden Ansprüche, **dadurch gekennzeichnet, dass**
der Vorsprung (12) die als Durchbruch ausgebildete Ausnehmung (10) abschnittsweise hintergreift und/oder der Vorsprung (12) und/oder das erste Teil (11) im Bereich der Ausnehmung (10) mindestens eine Schnapp- und/oder Rasteinrichtung aufweist.

8. Kinderaufnahmeeinrichtung nach einem der vorhergehenden Ansprüche, **dadurch gekennzeichnet, dass**
der erste Querschnitt (14) den zweiten Querschnitt (15) abschnittsweise überragt.

9. Kinderaufnahmeeinrichtung nach einem der vorhergehenden Ansprüche, **dadurch gekennzeichnet, dass**
der Vorsprung (12) und/oder das erste Teil (11) im Bereich der Ausnehmung (10) mindestens eine Aussparung, insbesondere einen Schlitz aufweist.

10. Kinderaufnahmeeinrichtung nach einem der vorhergehenden Ansprüche, **gekennzeichnet durch** mindestens ein Vorsprung/Ausnehmungs-Paar wobei jeder Vorsprung (12) dem zweiten Teil (13) und die zugehörige Ausnehmung (10) dem ersten Teil (11) zugeordnet ist, und/oder
**dadurch gekennzeichnet, dass** das erste Teil (11) mindestens zwei Ausnehmungen aufweist, die jeweils ausgebildet sind mit korrespondieren Vorsprüngen des zweiten Teils verbunden zu werden.

11. Kinderaufnahmeeinrichtung nach einem der vorhergehenden Ansprüche, **dadurch gekennzeichnet, dass**
das erste (11) und/oder zweite (13) Teil Folgendes zumindest mitausbildet/-n: eine Sitzschale eine Sitzbasis oder einen Fangkörper für einen Kindersitz; oder dass
das erste (11) oder zweite (13) Teil Folgendes umfasst: eine Sitzschale, eine Sitzbasis oder einen Fangkörper für einen Kindersitz.

12. Kinderaufnahmeeinrichtung nach einem der vorhergehenden Ansprüche, **dadurch gekennzeichnet, dass**
das erste (11) und/oder zweite (13) Teil mindestens 5 g wiegt und/oder der jeweilige Vorsprung (12) höchstens 20 Gew.-%des zugeordneten ersten (11) bzw. zweiten (13) Teils ausbildet und/oder
das zweite Teil (13) mindestens 0,01-mal so schwer ist, wie das erste Teil (11).

13. Kinderaufnahmeeinrichtung nach einem der vorhergehenden Ansprüche, **dadurch gekennzeichnet, dass**
mindestens ein Vorsprung (12) einstückig an das erste (11) bzw. zweite (13) Teil angeformt ist und/oder
mindestens ein Vorsprung (12) und/oder das erste Teil (11) und/oder das zweite Teil (13) zumindest abschnittsweise aus einem Kunststoff und/oder einem Metall, gebildet ist.

14. Verfahren zum Herstellen einer Kinderaufnahmeeinrichtung nach Anspruch 1, wobei
das erste Teil (11) und das zweite Teil (13) bereitgestellt wird, wobei der mindestens eine Vorsprung (11) zum Verbinden der beiden Teile (11, 13) in die mindestens eine Ausnehmung (10) geführt wird, um zwischen Ausnehmung (10) und Vorsprung (12) im verbundenen Zustand eine reibschlüssige Verbindung herzustellen.

## Claims

1. Child holding device, in particular child seat, pram, highchair, child cradle, crib, or child carrier, comprising a first part (11), which is dimensionally stable at least in some sections, and a second part (13), which is dimensionally stable at least in some sections and is connected or connectable to the first part (11),
wherein the first part (11) has a recess (10), which is cylindrical at least in some sections, having at least one first cross section (14) and the second part (13) has a projection (12), which is cylindrical at least in some sections, having at least one second cross section (15), wherein the second cross section (15) protrudes beyond the first cross section (14) at least in some sections at least in a starting state of the parts (11, 13), before the connection thereof,
wherein the second cross section (15) is formed triangular, rectangular, or hexagonal, wherein the projection (12) is insertable into the recess (10), and wherein a friction-locked connection exists between the recess (10) and the projection (12) in the connected state.

2. Child holding device as claimed in claim 1,
**characterized in that**
the projection (12) has at least one fourth cross section, which corresponds to a third cross section of the recess, at least in a starting state of the second projection, before a connection to the recess, and/or does not protrude beyond the third cross section, wherein the third cross section preferably corresponds at least to a first cross section (14).

3. Child holding device as claimed in any one of the preceding claims,
**characterized in that**
the recess (10) is formed as a pocket hole or as a passage.

4. Child holding device as claimed in any one of the preceding claims,
**characterized in that**
a formfitting connection exists between the recess (10) and the projection (12) in the connected state.

5. Child holding device as claimed in any one of the preceding claims,
**characterized in that**
the first part (11) is made at least in some sections from a first material and the second part (13) is made at least in some sections from a second material, wherein the first material is softer than the second material and/or has a lower modulus of elasticity than the second material and/or wherein the first material is formed from a porous and/or expanded plastic and/or wherein the second material is formed from a metal and/or a nonporous and/or non-expanded plastic.

6. Child holding device as claimed in any one of the preceding claims,
**characterized in that**
the projection (13) and/or a wall of the recess (10) has at least one spring section, in particular a leaf spring section (20), preferably at or inside a distal section of the projection.

7. Child holding device as claimed in any one of the preceding claims,
**characterized in that**
the projection (12) engages in some sections behind the recess (10) formed as a passage and/or the projection (12) and/or the first part (11) has at least one snap and/or catch device in the area of the recess (10).

8. Child holding device as claimed in any one of the preceding claims,
**characterized in that**
the first cross section (14) protrudes beyond the second cross section (15) in some sections.

9. Child holding device as claimed in any one of the preceding claims,
**characterized in that**
the projection (12) and/or the first part (11) has at least one opening, in particular a slot, in the area of the recess (10).

10. Child holding device as claimed in any one of the preceding claims,
**characterized by** at least one projection/recess pair, wherein each projection (12) is assigned to the second part (13) and the associated recess (10) is assigned to the first part (11), and/or **characterized in that** the first part (11) has at least two recesses, which are each designed to be connected to corresponding projections of the second part.

11. Child holding device as claimed in any one of the preceding claims,
**characterized in that**
the first (11) and/or second (13) part at least partially form(s) the following: a seat shell of a seat base or an impact shield for a child seat; or that
the first (11) or second (13) part comprises the following: a seat shell, a seat base, or an impact shield for a child seat.

12. Child holding device as claimed in any one of the preceding claims,
**characterized in that**
the first (11) and/or second (13) part weighs at least 5 g and/or the respective projection (12) forms at most 20 wt.% of the assigned first (11) or second (13) part and/or the second part (13) is at least 0.01 times as heavy as the first part (11).

13. Child holding device as claimed in any one of the preceding claims,
**characterized in that**
at least one projection (12) is integrally formed on the first (11) or second (13) part and/or at least one projection (12) and/or the first part (11) and/or the second part (13) is formed at least in some sections from a plastic and/or a metal.

14. Method for producing a child holding device as claimed in claim 1, wherein
the first part (11) and the second part (13) are provided, wherein the at least one projection (11) for connecting the two parts (11, 13) is guided in the at least one recess (10) in order to establish a friction-locked connection between the recess (10) and the projection (12) in the connected state.

## Revendications

1. Dispositif destiné à recevoir un enfant, en particulier siège enfant, poussette, berceau, lit d'enfant ou porte-bébé, comprenant une première partie (11) de forme stable au moins par zones et une deuxième partie (13) de forme stable au moins par zones assemblée ou pouvant être assemblée avec la première partie (11), dans lequel la première partie (11) comporte un évidement (10), en particulier cylindrique au moins par zones, avec au moins une première section (14) et la deuxième partie (13) présente une saillie (12), en particulier cylindrique au moins par zones, avec au moins une deuxième section (15), laquelle deuxième section (15) dépasse au moins par zones de la première section (14) au moins dans un état initial des parties (11, 13) avant leur assemblage, la deuxième section (15) ayant une forme triangulaire, quadrangulaire ou hexagonale, la saillie (12) pouvant être introduite dans l'évidement (10) et un assemblage par friction étant établi entre l'évidement (10) et la saillie (12) dans l'état assemblé.

2. Dispositif destiné à recevoir un enfant selon la revendication 1, **caractérisé en ce que** la saillie (12) comporte au moins une quatrième section qui correspond à une troisième section de l'évidement, au moins dans un état initial de la deuxième saillie avant un assemblage avec l'évidement, et/ou ne dépasse pas de la troisième section, laquelle troisième section correspond de préférence au moins à une première section (14).

3. Dispositif destiné à recevoir un enfant selon l'une des revendications précédentes, **caractérisé en ce que** l'évidement (10) est conformé comme un trou borgne ou comme une traversée.

4. Dispositif destiné à recevoir un enfant selon l'une des revendications précédentes, **caractérisé en ce qu'**un assemblage par engagement positif est établi entre l'évidement (10) et la saillie (12) dans l'état assemblé.

5. Dispositif destiné à recevoir un enfant selon l'une des revendications précédentes, **caractérisé en ce que** la première partie (11) est faite au moins par zones d'un premier matériau et la deuxième partie (13) est faite au moins par zones d'un deuxième matériau, le premier matériau étant plus mou que le deuxième matériau et/ou présentant un module d'élasticité plus bas que le deuxième matériau et/ou le premier matériau étant composé d'un plastique poreux et/ou expansé et/ou le deuxième matériau étant composé d'un métal et/ou d'un plastique non poreux et/ou non expansé.

6. Dispositif destiné à recevoir un enfant selon l'une des revendications précédentes, **caractérisé en ce que** la saillie (13) et/ou une paroi de l'évidement (10) comportent au moins une zone formant ressort, en particulier une zone formant ressort à lame (20), de préférence sur ou à l'intérieur d'une zone distale de la saillie.

7. Dispositif destiné à recevoir un enfant selon l'une des revendications précédentes, **caractérisé en ce que** la saillie (12) saisit par l'arrière, par zones, l'évidement (10) conformé comme une traversée et/ou la saillie (12) et/ou la première partie (11) présentent un dispositif d'enclenchement ou d'encliquetage au niveau de l'évidement (10).

8. Dispositif destiné à recevoir un enfant selon l'une des revendications précédentes, **caractérisé en ce que** la première section (14) dépasse par zones de la deuxième section (15).

9. Dispositif destiné à recevoir un enfant selon l'une des revendications précédentes, **caractérisé en ce que** la saillie (12) et/ou la première partie (11) présentent au moins une découpe, en particulier une fente, au niveau de l'évidement (10).

10. Dispositif destiné à recevoir un enfant selon l'une des revendications précédentes, **caractérisé en ce qu'**il comporte au moins une paire saillie-évidement, chaque saillie (12) étant associée à la deuxième partie (13) et l'évidement (10) correspondant à la première partie (11), et/ou
**caractérisé en ce que** la première partie (11) comporte au moins deux évidements qui sont conformés chacun de façon à être assemblés aux saillies correspondantes de la deuxième partie.

11. Dispositif destiné à recevoir un enfant selon l'une des revendications précédentes, **caractérisé en ce que** la première partie (11) et/ou la deuxième (13) participent au moins à la formation d'une coque de siège, d'une base de siège ou d'un élément de rétention pour un siège enfant ou
**en ce que** la première partie (11) ou la deuxième (13) comprend une coque de siège, une base de siège ou un élément de rétention pour un siège enfant.

12. Dispositif destiné à recevoir un enfant selon l'une des revendications précédentes, **caractérisé en ce que** la première partie (11) et/ou la deuxième (13) pèsent au moins 5 g et/ou la saillie (12) correspondante représente au maximum 20 % du poids de la première (11) ou deuxième partie (13) associée et/ou
bien la deuxième partie (13) pèse au moins 0,01 fois plus lourde que la première partie (11).

13. Dispositif destiné à recevoir un enfant selon l'une des revendications précédentes, **caractérisé en ce qu'**au moins une saillie (12) est formée d'un seul tenant sur la première partie (11) ou la deuxième (13) et/ou au moins une saillie (12) et/ou la première partie (11) et/ou la deuxième partie (13) sont composées au moins par zones d'une matière plastique et/ou d'un métal.

14. Procédé de fabrication d'un dispositif destiné à recevoir un enfant selon la revendication 1, dans lequel la première partie (11) et la deuxième partie (13) sont préparées, l'au moins une saillie (11) étant guidée dans l'au moins un évidement (10) pour assembler les deux parties (11, 13) afin d'établir un assemblage par friction entre l'évidement (10) et la saillie (12) dans l'état assemblé.
